# EUROPEAN PATENT APPLICATION

(11) **EP 4 331 887 A1**
(43) Date of publication of application: **06.03.2024**
(21) Application number: 22193460.7
(22) Date of filing: 01.09.2022
(51) Int. Cl.: B60K 15/03, B60K 15/063, B60K 15/07

(54) **FASTENING DEVICE AND GAS FUEL STORAGE ASSEMBLY AND VEHICLE AND METHOD**

(71) Applicant: Scania CV AB, 151 87 Södertälje (SE)
(72) Inventor: MAZIERO, Gustavo, 09732-340 São Bernardo do campo (BR)
(74) Representative: Scania CV AB

(57) **Abstract**

The disclosure concerns a fastening device (2) for fastening a first and a second container (4', 4") to a structure of a vehicle (1), the fastening device (2) comprises: an elongated member (16) with external engagement members (18), a first abutment (20), a displaceable member (22), a guide arrangement (12), comprising a second abutment (24), a holed member (28), and a resilient compressible member (32). The elongated member (16) extends along an axis (19) and the displaceable member (22), the guide arrangement (12), the resilient compressible member (32), and the holed member (28) are aligned along the axis (19). The elongated member (16) extends through the displaceable member (22) and at least partially through the guide arrangement (12) for engagement between external engagement members (18) of the elongated member (16) and internal engagement members (30) of the holed member (28) for compression of the resilient compressible member (32).

## Description

### TECHNICAL FIELD

The invention relates to a fastening device, a gas fuel storage assembly, and to a vehicle. The invention further relates to a method for assembly of a gas fuel storage assembly.

### BACKGROUND

A container may be connected to a structure with a fastening device that utilises a band arrangement connected to the structure. One or more bands of the band arrangement may extend at least partially around the container.

One type of container connected to a structure in this manner may be a pressure vessel. For instance, the pressure vessel may be a pressure vessel for compressed gas and the structure may be a chassis of a vehicle, such as gas-powered vehicle.

A tension in the one or more bands of the band arrangement around at least part of the container ensures that the container is securely held by the one or more bands and thus, securely attached by the fastening device to the structure. A clamping force provided by the fastening device causes the tension in the one or more bands.

It may be difficult to provide an appropriate clamping force in a fastening device comprising one or more bands extending at least partially around a container.

One common fastening device provides a rigid fixation. Using such a fastening device, it is possible to control an initial clamping force. However, in case of a pressure vessel, a diameter of the pressure vessel may vary i.e., the diameter increases as it is pressurised, and the diameter is reduced when the pressure is again reduced. Consequently, the clamping force and the tension in the one or more bands increase and decrease as well. When the at least one band is of low elasticity, the clamping force increase steeply and puts considerable additional stress on the fastening device.

Such a steep increase in clamping force may be avoided in a different kind of known fastening device. This fastening device includes a spring and expands as a diameter of the container increases. Thus, the clamping force and the tension in the one or more bands only increases within a limited range of an initial force/tension as the container diameter increases.

For instance, WO 2018/030931 A1 discloses an example of a fuel tank attaching structure in a motor vehicle having at least one expandable and contractible fuel tank for storing compressed gas mounted thereon. The fastening device comprises at least one bracket fixed to a vehicle chassis for supporting the at least one fuel tank and at least one tensioning strap around the fuel tank. At least one tensioning device is acting between a first end and a second end of the tensioning strap whereby a spring load of the tensioning device applies a holding force of the tensioning strap to the gas tank regardless of whether the gas tank is expanded or not. The at least one tensioning device includes two fork-shaped fastening elements with spring means arranged in between shanks of the fork-shaped fastening elements. Assembly and mounting of the fuel tank attaching structure, in particular mounting of the fork-shaped fastening elements may be cumbersome and costly.

### SUMMARY

It is aimed at providing an alternative fastening device to the one disclosed in WO 2018/030931 A1. It would be advantageous to achieve a fastening device, which is of a less complicated structure than that disclosed in WO 2018/030931 A1. In particular, it would be desirable to enable tensioning of a band around at least part of a container in an easily assembled fastening device. To better address one or more of these concerns, a fastening device, a gas fuel storage assembly, a vehicle, and/or a method having the features defined in one or more of the independent claims is provided. It is understood that all the various examples of the fastening device also apply for the gas fuel storage assembly, the vehicle and/or the method as disclosed herein, and vice versa.

According to an aspect, there is provided a fastening device for fastening a first and a second container to a structure of a vehicle. The fastening device comprises: an elongated member at least partly provided with external engagement members, a first abutment arranged concentrically with the elongated member, a displaceable member connectable to a first band member configured to extend at least partially around the first container and to a second band member configured to extend at least partially around the second container, a guide arrangement comprising a second abutment, a holed member at least partly provided with internal engagement members, and a resilient compressible member positioned between the first abutment and the displaceable member or between the second abutment and the holed member. The elongated member extends along an axis and the displaceable member, the guide arrangement, the resilient compressible member, and the holed member are aligned along the axis. The elongated member extends through the displaceable member and at least partially through the guide arrangement for engagement between the external engagement members of the elongated member and the internal engagement members of the holed member for compression of the resilient compressible member.

Since the fastening device comprises the elongated member, the displaceable member connectable to the first and second band members, the guide arrangement, the holed member, and the resilient compressible member, and since the elongated member extends through the displaceable member and at least partially through the guide arrangement for engagement between the external engagement members of the elongated member and the internal engagement members of the holed member for compression of the resilient compressible member - the displaceable member is biased to tension the first and second band members by the resilient compressible member.

Thus, the fastening device is configured to facilitate tensioning of the first and second band members at least partially around the first and second containers, respectively, via compression of the resilient compressible member by engagement between the external engagement members of the elongated member and the internal engagement members of the holed member.

Moreover, the resilient compressible member not only provides a tension in the first and second band members, but due to the compressible property of the resilient compressible member, also ensures that a limited further strain is put on the first and second band members in case of an expansion of the first and second containers, which may occur if they are pressure vessels.

The present fastening device provides easy tensioning of the first and second band members due to only the elongated member having to engaged with the holed member. This provides a cost-efficient way of fastening two containers to a structure of a vehicle.

More specifically, the fastening device is utilised for fastening first and second containers to a structure of a vehicle. The structure of the vehicle may be a structure forming part of a chassis of the vehicle or a structure configured to be attached to the chassis of the vehicle.

The first and second band members extend at least partially around respective of the first and second containers. In addition to being connectable to the displaceable member at respective first ends of the first and second band members, opposite second ends of the first and second band members are fixed in relation to the vehicle, such as by being connected to the structure of the vehicle.

As mentioned above, in the fastening device, there is provided for engagement between the external engagement members of the elongated member and the internal engagement members of the holed member. Herein, for the sake of simplicity, reference is alternatively made to engagement between the elongated member and the holed member or the elongated member engaging with the holed member. Accordingly, such engagement or engaging is provided by the external engagement members of the elongated member and the internal engagement members of the holed member.

The elongated member, when engaged with the holed member, is arranged such that the resilient compressible member is compressed or able to be compressed, either between the first abutment and the displaceable member or between the second abutment and the holed member. Thus, when the resilient compressible member is compressed, the first and second band members are tensioned and the first and second containers are securely fastened to the structure of the vehicle.

The first and second containers may be pressure vessels. The pressure vessels may be made from metal, such as steel, or from a composite material, such as a carbon fibre reinforced material. In the latter case, the pressure vessels may expand less when under pressure than in the case of vessels made of metal, such as steel.

The at least first and second containers may have a rounded shape, such as a generally cylindrical shape. The at least first and second containers may be configured for storing gas. Thus, the first container may be a first gas storage tank, and the second container may be a second gas storage tank. The at least first and second containers may be configured for storing CNG (Compressed Natural Gas).

The term container, however, is to be interpreted broadly and may include a tank, a vessel, a housing of a vehicle component such as a battery, a utility box, etc.

The displaceable member forms a link between the fastening device and the first and second band members. In order to fasten the first and second containers to the structure of a vehicle, the displaceable member is displaced along the axis when the elongated member is engaged with the holed member. Thus, the first and second band members are tightened at least partially around the first and second containers, respectively.

Engagement of the elongated member with the holed member causes the displaceable member to be positioned in relation to the guide arrangement such that the first and second band members are tightened around at least part of the first and second containers.

During mounting of the fastening device, engagement of the elongated member with the holed member causes the displaceable member to be displaced towards the holed member. This displacement of the displaceable member causes the first and second band members to provide a clamping force around the respective first and second containers.

As mentioned above, the first and second band members are configured for extending at least partially around the first and second containers, respectively. Accordingly, the lengths of the first and second band members are determined by the relevant containers and optionally also by the relevant structure, to which the container is to be connected with the fastening device. Generally, larger containers may require longer band members than smaller containers.

Tensions in the first and second band members ensure that the first and second containers are securely connected to the structure of the vehicle. The clamping force that causes the tensions in the first and second band members are provided by the resilient compressible member when the elongated member is engaged with the holed member.

The elongated member may be a screw or a bolt or any other suitable elongated object that is provided with external engagement members and that is strong enough to withstand the forces caused by the resilient compressible member and the tension in the first and second band members during use of the fastening device. For instance, the elongated member may be made from metal, such as steel.

The external engagement members of the elongated member may be e.g., threads or protrusions forming part of a ratchet mechanism or of a snap-fit mechanism.

The holed member may be e.g. a nut or a pipe portion suitable for receiving at least partially therethrough a portion of the elongated member.

The internal engagement members of the holed member may be e.g., threads or protrusions forming part of a ratchet mechanism or a snap-fit mechanism. That is, the internal engagement members are arranged at least partially inside a hole of the holed member.

Accordingly, engagement between the external and internal engagement members may be achieved by tightening of external and internal threads or by pushing the elongated member into the holed member for engagement of a rachet mechanism or a snap-fit mechanism.

Herein, the term abutment relates to that part of a member, an element, or similar that directly receives thrust or pressure. The thrust or pressure is caused by the compressed resilient compressible member and the tension in the first and second band members during use of the fastening device.

The first abutment may form part of the elongated member or of a separate element, such as a sleeve arranged around the elongated member. The second abutment may form an integral part of the guide arrangement or be formed by an element included in the guide arrangement.

The guide arrangement is configured to be secured to the structure of the vehicle. Thus, the guide arrangement forms an anchor or attachment point of the fastening device to the structure of a vehicle.

For instance, the guide arrangement may be screwed or welded to the structure of the vehicle.

As mentioned above, the elongated member extends through the displaceable member and at least partially through the guide arrangement. Accordingly, the guide arrangement forms an arrangement in relation to which, at least one other part of the fastening device, such as the elongated member, is guided.

The guide arrangement may comprise more than one separate member or part, which separate members or parts are assembled to form the guide arrangement.

The resilient compressible member may comprise any suitable compressible member for tensioning the first and second band members and for absorbing possible expansion of the first and second containers. The resilient compressible member may comprise one or more of a compression spring, coned-disc spring (Belleville washer), or an elastomer member such as e.g. a rubber tube portion.

As mentioned above, when the external engagement members of the elongated member engage with the internal engagement members of the holed member, the resilient compressible member is compressed.

During use of the fastening device, the resilient compressible member is compressed between the first abutment and the displaceable member or between the second abutment and the holed member. Thus, the resilient compressible member is configured to directly or indirectly apply a force to the displaceable member to tension the first and second band members.

The particular clamping force to be provided by the resilient compressible member is determined for each particular construction case and depends inter alia on the relevant containers to be fastened by the fastening device and under what operating conditions the fastening device is used. Specifically, the reduction in length of the resilient compressible member and the force constant of the resilient compressible member determine the clamping force.

According to embodiments, the guide arrangement may comprise a first guide member, being provided with a through hole concentrically with the axis, wherein the second abutment may extend around the through hole, and wherein the resilient compressible member and the holed member may be arranged at least partially within the first guide member. In this manner, the elongated member may extend through the through hole of the first guide member and through the resilient compressible member to engage with the holed member. Moreover, the resilient compressible member and the holed member may thus, be conveniently arranged at least partially within the guide arrangement.

According to embodiments, the guide arrangement may comprise a second guide member, and the displaceable member may be arranged at least partially within the second guide member. In this manner, the guide arrangement may be provided for guiding the displaceable member.

According to embodiments, the fastening device may comprise a sleeve arranged concentrically with the axis, and wherein the sleeve comprises the first abutment. In this manner, the elongated member may extend through the sleeve for the first abutment to be moved in a direction towards the displaceable member when the elongated member engages with the holed member.

According to embodiments, the displaceable member may comprise a first pin and a second pin on opposite sides of the axis, and the first band member may be connectable to the displaceable member via the first pin and the second band member may be connectable to the displaceable member via the second pin. In this manner, there may be provided for a convenient connection between the fastening device and the first and second band members. Moreover, the first and second pins may provide for a pivotable connection between the displaceable member and the first and second band members. Such a pivotable connection may ensure that the first and second band members align properly along a force component directed to/from the displaceable member. The first and second band members may thus, not be subjected to bending load.

According to embodiments, the second guide member may comprise a first slot and a second slot, wherein the first pin may be slidably arranged in the first slot, and wherein the second pin may be slidably arranged in the second slot. In this manner, movement of the first and second pins and accordingly, also movement of the first and second band members may be controlled along the first and second slots as the displaceable member is displaced in relation to the second guide member when the elongated member engages with the holed member to tension the first and second band members.

Moreover, since during use of the fastening device, the first and second band members are connected to the first and second pins, and since the first and second pins are arranged in the first and second slots, the second guide member is prevented by the first and second band members from rotating in relation to the first guide member.

According to embodiments, the guide arrangement may comprise at least two support surfaces each of which is configured for supporting one of the first and second containers. In this manner, the first and second containers may be securely positioned in relation to the fastening device when in use for fastening the containers to the structure of a vehicle.

According to embodiments, the holed member may be rotationally locked in relation to the guide arrangement. In this manner, engagement between the external engagement members of the elongated member and the internal engagement members of the holed member may be facilitated. In particular, when the external and internal engagement members comprise threads such engagement of the elongated member in the holed member may be facilitated.

According to a further aspect, there is provided a gas fuel storage assembly comprising at least a first container and a second container configured for storing gas, a bracket, a first band member, a second band member, and a fastening device according to any one of aspects and/or embodiments discussed herein, wherein the first and second band members and the fastening device secure the first and second containers to the bracket.

Since the herein discussed fastening device secures the first and second containers to the bracket, the gas fuel storage assembly provides for easily tensioning of the first and second band members at least partially around first and second containers configured for storing gas while also limiting further strain in the first and second band members when the first and second containers expand. Thus, a cost-efficient way of securing the first and second containers to the bracket is provided.

According to this aspect, the first and second containers may be a first gas storage tank and a second gas storage tank. The gas stored in such gas storage tanks may be compressed gas, such as CNG (Compressed Natural Gas) used as fuel in a combustion engine.

According to a further aspect, there is provided a vehicle comprising a chassis and a gas fuel storage assembly according to any one of aspects and/or embodiments discussed herein connected to the chassis.

Since the vehicle comprises the herein discussed gas fuel storage assembly, which in turn comprises the herein discussed fastening device, there is provided for easily tensioning of the first and second band members at least partially around the first and second containers while also limiting further strain in the first and second band members when the first and second containers expand. Thus, a cost-efficient way of securing the first and second containers to the vehicle is provided.

According to a further aspect, there is provided a method for assembly of a gas fuel storage assembly comprising at least a first container and a second container configured for storing gas, a bracket, a first band member, a second band member, and a fastening device according to any one of aspects and/or embodiments discussed herein. The method comprises steps of:
securing the guide arrangement of the fastening device to the bracket,
positioning the first and second containers against the bracket,
placing the first and second band members to extend at least partially around the first and second containers,
securing the first and second band members to the fastening device and to the bracket, and engaging the elongated member of the fastening device with the holed member of the fastening device such that the resilient compressible member of the fastening device is compressed.

Thus, a method is provided that ensures a cost-efficient way of assembling a gas storage tank assembly, such as for securing first and second gas storage tanks to the bracket.

The bracket may form part of a chassis of a vehicle or may be mounted to a chassis of a vehicle. The vehicle may be a vehicle as discussed herein.

One or more steps of the method may be performed in a different order than listed above.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 illustrates a vehicle according to embodiments,
Figs. 2a - 2c illustrate a gas fuel storage assembly according to embodiments,
Figs. 3a and 3b schematically illustrate a fastening device according to embodiments,
Figs. 4a and 4b schematically illustrate a fastening device according to embodiments,
Figs. 5a - 5c illustrate a fastening device according to embodiments, and
Fig. 6 illustrates a method for assembly of a gas fuel storage assembly.

### DETAILED DESCRIPTION

Aspects and/or embodiments of the invention will now be described more fully. Like numbers refer to like elements throughout. Well-known functions or constructions will not necessarily be described in detail for brevity and/or clarity. It is understood that all the various examples of the fastening device also apply for the gas fuel storage assembly, the vehicle, and/or the method as disclosed herein, and vice versa.

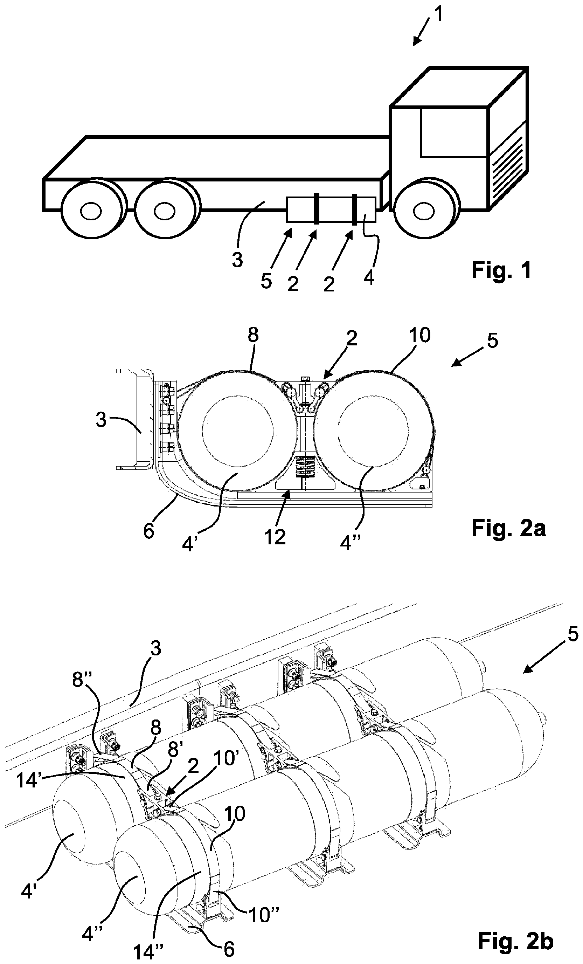

**Fig. 1** illustrates a vehicle 1 according to embodiments.

The vehicle 1 may be any kind of vehicle configured for land-based propulsion, such as e.g., a bus, a truck, a heavy truck, a car, or a train. In **Fig. 1****,** the vehicle 1 is illustrated as a heavy load vehicle in the form of a truck.

The vehicle 1 comprises at least two containers 4. The containers 4 are secured to a chassis 3 of the vehicle 1 by at least one fastening device 2 according to any one of aspects and/or embodiments discussed herein. The at least two containers 4 as shown in **Fig. 1** may comprise the first container (4') and the second container (4") as shown in the embodiments discussed below with reference to **Figs. 2a-5c****.**

In the illustrated embodiments, the containers 4 are secured to the chassis 3 with two fastening devices 2. Each of the fastening devices 2 may be a fastening device 2 in accordance with one of embodiments discussed below with reference to **Figs. 2a** - **5c****.**

Moreover, the vehicle 1 comprises the chassis 3 and according to some aspects and/or embodiments, a gas fuel storage assembly 5 according to any one of aspects and/or embodiments discussed herein connected to the chassis 3.

In such aspects/embodiments, the at least two containers 4 may be gas storage tanks configured for receiving and accommodating compressed gas and for providing gas to a combustion engine of the vehicle 1.

Embodiments of the gas storage assembly 5 are discussed below with reference to **Figs. 2a -2c****.**

As discussed herein, the fastening device 2 provides easy fastening of containers 4, 4', 4" to a structure of a vehicle 1 as well as being able to absorb an increase in container diameter, caused by an internal gas pressure in the containers 4, 4', 4", with a limited increase in a clamping force around at least part of the containers 4, 4', 4".

The gas in the containers 4, 4', 4" may be a gaseous fuel, such as natural gas or biogas, to be combusted in a combustion engine of the vehicle 1. Alternatively, the gas may be compressed air utilised e.g., in a brake system of the vehicle 1.

A further alternative is that the gas in the containers 4, 4', 4" may be a hydrogen fuel to be combusted in a combustion engine of the vehicle 1 or to be supplied to a fuel cell for a reaction therein to provide electricity for an electrical vehicle 1.

According to alternative embodiments, the containers 4, 4', 4" may be any other type of containers connected to the cassis 3 of the vehicle 1, such as battery and/or utility boxes.

The number of fastening devices 2 used for connecting the containers 4, 4', 4" to the chassis 3 may be selected in order to provide a secure fastening of the relevant containers 4, 4', 4" and may depend on the size and weight of the containers 4, 4', 4".

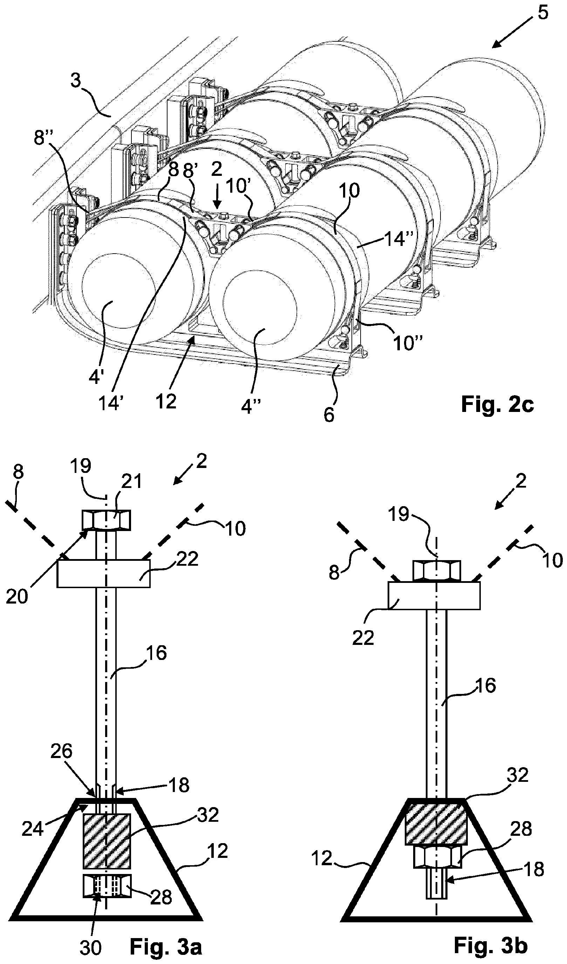

**Figs. 2a** - **2c** illustrate a gas fuel storage assembly 5 according to embodiments. **Fig. 2a** shows a side view of the gas fuel storage assembly 5, **Fig. 2b** shows an isometric view of the gas fuel storage assembly 5, and **Fig. 2c** shows a further isometric view of the gas fuel storage assembly 5.

The gas fuel storage assembly 5 is configured for being connected to a vehicle.

In **Figs. 2a** - **2c****,** the gas fuel storage assembly 5 is shown connected to a vehicle, such as a cassis 3 of a vehicle. The vehicle may be a vehicle 1 as discussed above with reference to **Fig. 1****.**

The gas fuel storage assembly 5 comprises at least a first container 4' and a second container 4" configured for storing gas, a bracket 6, a first band member 8, a second band member 10, and a fastening device 2 according to any one of aspects and/or embodiments discussed herein.

The bracket 6 is provided with holes such that it can be mounted with e.g., rivets or screws to a structure of a vehicle, such as the chassis 3 of the vehicle. In this manner, the gas fuel storage assembly 5 may be configured for being connected to a vehicle.

The bracket 6 may be seen to form part of a structure of the vehicle 1. A further alternative may be for the chassis 3 of the vehicle 1 to comprise the bracket 6.

In the illustrated embodiments, the bracket 6 is substantially L-shaped. However, the bracket may have any other shape that lends it suitable for being connected to a structure of a vehicle.

The first and second band members 8, 10 and the fastening device 2 secure the first and second containers 4', 4" to the bracket 6.

Mentioned purely as examples, the first and second band members 8, 10 may be made from sheet metal, woven metal threads, woven aramid, or woven nylon i.e., a strong material of low elasticity suitable for securely holding the first and second containers 4', 4" against the bracket 6.

Depending on the size of the relevant gas fuel storage assembly 5, it may comprise more than one bracket 6, first band member 8, second band member 10, and fastening device 2. In the illustrated embodiments, the gas fuel storage assembly 5 comprises three brackets, first band members, second band members, and fastening devices.

The first and second containers 4', 4" may form first and second gas storage tanks.

The gas stored in the containers 4', 4" may be compressed gas, such as CNG or biogas used as fuel in a combustion engine.

The fastening device 2 may be a fastening device 2 as discussed below with reference to **Figs. 3a** - **5c**.

According to embodiments of the gas fuel storage assembly 5, a guide arrangement 12 of the fastening device 2 may be secured to the bracket 6 between the first and second containers 4', 4". In this manner, the first and second band members 8, 10 may be directed from the fastening device 2 to extend at least partially around respective of the first and second containers 4', 4".

Moreover, in this manner, the fastening device 2 may be secured to the bracket via the guide arrangement.

See further below with reference to **Figs. 3a** - **5c** concerning various embodiments of the guide arrangement 12 of the fastening device 2.

According to embodiments, of the gas fuel storage assembly 5, the first and second band members 8, 10 may be connected to the bracket 6. In this manner, the fastening device 2 may be utilised for tightening the first and second band members 8, 10 at least partially around the first and second containers 4', 4".

As mentioned above, the first and second band members 8, 10 extend at least partially around respective of the first and second containers 4', 4". Respective first ends 8', 10' of the first and second band members 8, 10 are connected to a displaceable member of the fastening device 2. Opposite second ends 8", 10" of the first and second band members 8, 10 are connected to the bracket 6.

For instance, each of the first and second band ends 8', 8", 10', 10" of the first and second band members 8, 10 may be provided with a sling for the purpose of the connection to the displaceable member of the fastening device 2 and the bracket 6.

Tensions in the first and second band members 8, 10 ensure that the first and second containers 4', 4" are securely connected to the bracket 6.

The gas fuel storage assembly 5 may comprise members for securely positioning the containers 4', 4" against the bracket 6 and/or against the first and second band members 8, 10. For instance a foamed band 14', 14" may be provided around each of the first and second containers 4', 4", between the bracket 6 and the first and second containers 4', 4" and between respective of the first and second band members 8, 10 and the first and second containers 4', 4".

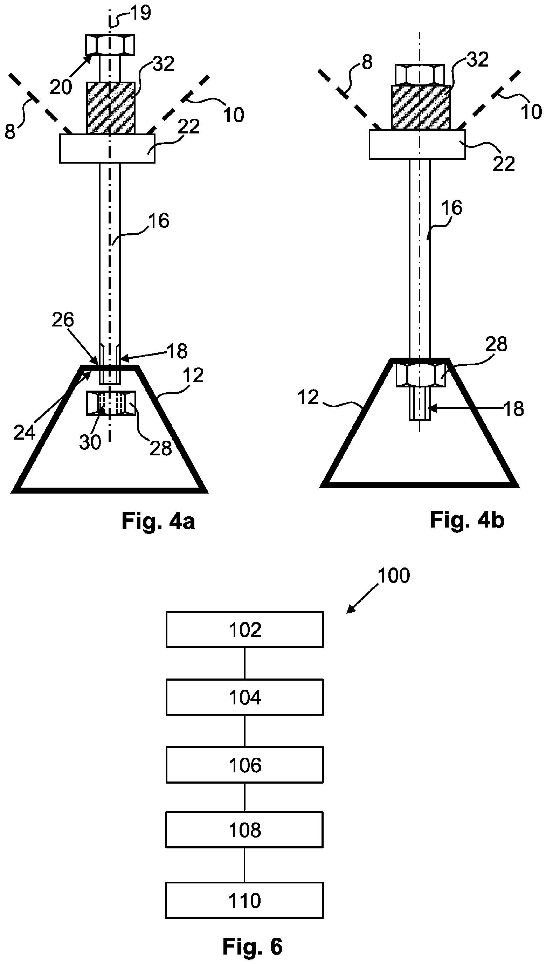

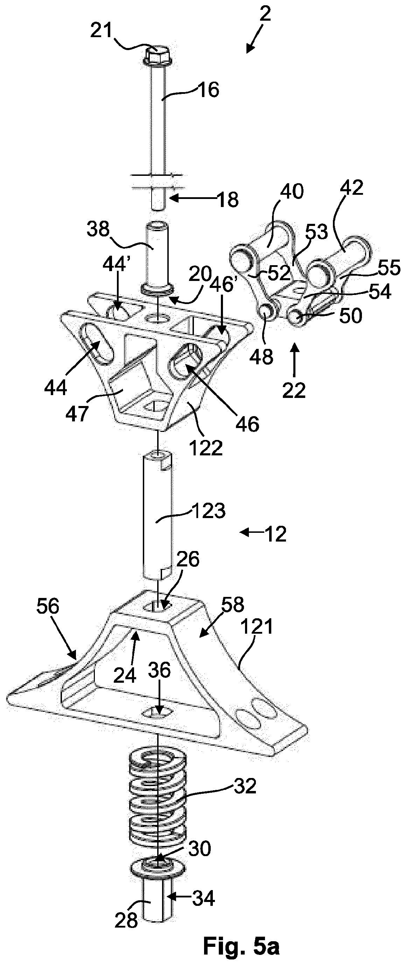

In the embodiments of **Figs. 2a** - **2c****,** each fastening devices 2 is illustrated as a fastening device 2 in accordance with the embodiments of **Figs. 5a** - **5c****.** Alternatively, the fastening devices 2 may be fastening devices 2 in accordance with embodiments of **Figs. 3a and 3b****.** or the embodiments of **Figs. 4a and 4b****.**

**Figs. 3a and 3b** schematically illustrate a fastening device 2 according to embodiments. **Fig. 3a** shows the fastening devices 2 in a pre-engaged state. **Fig. 3b** shows the fastening device 2 in an engaged state.

The fastening device 2 is a fastening device 2 for fastening a first and a second container 4', 4" to a structure of a vehicle 1. For instance, the fastening device 2 may be a fastening device of a gas fuel storage assembly 5 for a vehicle 1.

Accordingly, the fastening device 2 may be a fastening device 2 as discussed above with reference to **Fig.1** and with reference to **Figs. 2a** - **2c****.** Thus, in the following reference is also made to **Figs. 1** - **2c****.**

The fastening device 2 comprises an elongated member 16 at least partly provided with external engagement members 18. In the illustrated embodiments, the external engagement members 18 are threads and accordingly, the elongated member 16 may be a bolt or screw. The elongated member extends along an axis 19.

The fastening device 2 further comprises a first abutment 20 arranged concentrically with the elongated member 16. In the illustrated embodiments, the first abutment 20 is provided by the elongated member 16 in the form of at least part of an axial surface of a head 21 of the elongated member 16 being in the form of a threaded bolt.

Alternatively, the first abutment 20 may form part of a separate member, such as in the embodiments discussed below with reference to **Figs. 5a** - **5c**.

The fastening device 2 further comprises a displaceable member 22 connectable to a first band member 8 configured to extend at least partially around the first container 4' and to a second band member 10 configured to extend at least partially around the second container 4".

The elongated member 16 extends through the displaceable member 22. The displaceable member 22 is displaceable along the axis 19 directly, or indirectly, by the elongated member 16 as it is displaced along the axis 19. Moreover, the displaceable member 22 may be displaceable along the axis 19 by the first and second band members 8, 10 as they move with expanding and contracting of the first and/or second containers 4', 4".

The fastening device 2 further comprises a guide arrangement 12. The guide arrangement 12 forms an anchor or attachment point of the fastening device 2 to a structure, such as a structure of a vehicle e.g., a bracket or a chassis. Accordingly, the guide arrangement 12 is connectable to a structure.

In the illustrated embodiments, the guide arrangement 12 comprises one part only. Alternatively, the guide arrangement 12 may comprise more than one part e.g., as in the embodiments discussed below with reference to **Figs. 5a** - **5c**.

The guide arrangement 12 comprises a second abutment 24.

The guide arrangement 12 is provided with a through hole 26 concentrically with the axis 19 and the second abutment 24 extends around the through hole 26.

The elongated member 16 extends through the through hole 26 of the guide arrangement 12. Thus, the elongated member 16 may be guided in the guide arrangement 12.

The fastening device 2 further comprises a holed member 28 at least partly provided with internal engagement members 30.

In the illustrated embodiments, the holed member 28 is a nut and the internal engagement members 30 are threads.

Thus, the external engagement members 18 of the elongated member 16 in the form of external threads are arranged to engage with the internal engagement members 30 of the holed member 28 in the form of internal threads, as shown in **Fig. 3b****.**

The fastening device 2 further comprises a resilient compressible member 32 positioned between the second abutment 24 and the holed member 28. The resilient compressible member 32 is schematically illustrated and may be for instance an elastomer member such as e.g. a rubber member but may be any other suitable compressible member.

The elongated member 16 extends through the resilient compressible member 32.

As mentioned above, the elongated member 16 extends along the axis 19. The displaceable member 22, the guide arrangement 12, the resilient compressible member 32, and the holed member 28 are all aligned along the axis 19.

The elongated member 16 extends through the displaceable member 22, at least partially through the guide arrangement 12, and through the resilient compressible member 32 for engagement between the external engagement members 18 of the elongated member 16 and the internal engagement members 30 of the holed member 28 in order to compress the resilient compressible member 32, see **Fig. 3b****.**

As mentioned above, in **Fig. 3a**, the fastening device 2 is shown in a pre-engaged state. The guide arrangement 12 is fastened to a structure (not shown), the first and second band members 8, 10 are positioned to extend at least partially around the first and second containers (not shown), and the elongated member 16 has been inserted through the displaceable member 22 and the through hole 26 of the guide arrangement 12 to extend into the resilient compressible member 32.

Thus, the external engagement members 18 of the elongated member 16 and the internal engagement members 30 of the holed member 28 are ready to be engaged with each other. In these embodiments that means tightening the elongated member 16 in the holed member 28 i.e., tightening the threaded bolt 16 in the nut 28.

In **Fig. 3b****,** the fastening device 2 is shown in an engaged state. The external engagement members 18 of the elongated member 16 and the internal engagement members 30 of the holed member 28 are engaged with each other i.e., in these embodiments, the threaded bolt 16 and the nut 28 have been tightened.

Thus, the first and second band members 8, 10 are tensioned around at least part of the first and second containers (not shown) by the displaceable member 22 having been displaced in a direction towards the holed member 28. Also, the resilient compressible member 32 has been compressed between the second abutment 24 and the holed member 28.

More specifically, in the pre-engaged state, the threaded bolt 16 is movable in relation to the displaceable member 22 and the guide arrangement 12 in a direction along the axis 19. As the threaded bolt 16 engages with the nut 28, the first abutment 20 is pressed against the displaceable member 22 and the nut 28 presses the resilient compressible member 32 against the second abutment 24 thus, compressing the resilient compressible member 32.

Accordingly, the resilient compressible member 32, via the bolt 16 indirectly applies a force to the displaceable member 22 that tensions the first and second band members 8, 10. Put differently, the displaceable member 22 is biased by the resilient compressible member 32 to tension the first and second band members 8, 10.

The physical properties of the resilient compressible member 32 and the degree of compression of the resilient compressible member 32 determines the force applied to the displaceable member 22 and the tension in the first and second band members 8, 10.

**Figs. 4a and 4b** schematically illustrate a fastening device 2 according to embodiments.

The fastening device 2 of these embodiments resembles in much the fastening device 2 of the **Figs. 3a and 3b** embodiments. Accordingly, in the following mainly the differences between the embodiments will be discussed.

Again, the fastening device 2 is a fastening device 2 for fastening a first and a second container to a structure of a vehicle. Again, the fastening device 2 comprises: an elongated member 16 at least partly provided with external engagement members 18, a first abutment 20 arranged concentrically with the elongated member 16, a displaceable member 22 connectable to a first band member 8 configured to extend at least partially around the first container and to a second band member 10 configured to extend at least partially around the second container, a guide arrangement 12 comprising a second abutment 24, a holed member 28 at least partly provided with internal engagement members 30, and a resilient compressible member 32.

Again, the elongated member 16 extends along an axis 19 and the displaceable member 22, the guide arrangement 12, the resilient compressible member 32, and the holed member 28 are aligned along the axis 19. Again, the elongated member 16 extends through the resilient compressible member 32, through the displaceable member 22, and at least partially through the guide arrangement 12 for engagement between the external engagement members 18 of the elongated member 16 and the internal engagement members 30 of the holed member 28 for compression of the resilient compressible member 32.

In these embodiments, the resilient compressible member 32 is positioned between the first abutment 20 and the displaceable member 22. The resilient compressible member 32 is schematically illustrated and may be for instance an elastomer member such as e.g. a rubber member but may be any other suitable compressible member.

In **Fig. 4a**, the fastening device 2 is shown in a pre-engaged state. The guide arrangement 12 is fastened to a structure (not shown), the first and second band members 8, 10 are positioned to extend at least partially around the first and second containers (not shown), and the elongated member 16 has been inserted through the resilient compressible member 32, the displaceable member 22 and the through hole 26 of the guide arrangement 12.

Thus, the external engagement members 18 of the elongated member 16 and the internal engagement members 30 of the holed member 28 are ready to be engaged with each other.

In **Fig. 4b****,** the fastening device 2 is shown in an engaged state. The external engagement members 18 of the elongated member 16 and the internal engagement members 30 of the holed member 28 are engaged with each other i.e., in these embodiments, the threaded bolt 16 and the nut 28 have been tightened.

Thus, the first and second band members 8, 10 are tensioned around at least part of the first and second containers (not shown) by the displaceable member 22 having been displace in a direction towards the holed member 28. Also, the resilient compressible member 32 has been compressed between the first abutment 21 and the displaceable member 22.

More specifically, in the pre-engaged state, the threaded bolt 16 is movable in relation to the displaceable member 22 and the guide arrangement 12 in a direction along the axis 19. As the threaded bolt 16 engages with the nut 28, the first abutment 20 presses the resilient compressible member 32 against the displaceable member 22 and the nut 28 is pressed against the second abutment 24 thus, compressing the resilient compressible member 32. Accordingly, the resilient compressible member 32, by the tightened bolt 16, directly applies a force to the displaceable member 22 that tensions the first and second band members 8, 10.

Again, the displaceable member 22 is biased by the resilient compressible member 32 to tension the first and second band members 8, 10.

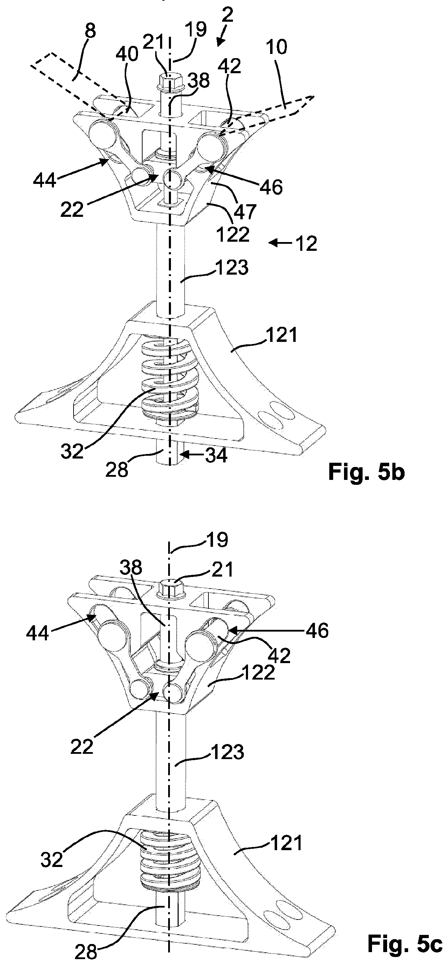

**Figs. 5a** - **5c** illustrate a fastening device 2 according to embodiments. **Fig. 5a** shows the fastening device 2 in an exploded view. **Fig. 5b** shows the fastening devices 2 in a pre-engaged state. **Fig. 5c** shows the fastening device 2 in an engaged state.

The fastening device 2 is a fastening device 2 for fastening a first and a second container to a structure of a vehicle. For instance, the fastening device 2 may be a fastening device of a gas fuel storage assembly for a vehicle.

Accordingly, the fastening device 2 may be a fastening device as discussed above with reference to **Fig.1** and with reference to **Figs. 2a** - **2c**. Thus, in the following reference is also made to **Figs. 1** - **2c**.

The fastening device 2 of these embodiments resembles in much the fastening device 2 of the **Figs. 3a** - **4b** embodiments. Accordingly, in the following mainly the differences between the embodiments will be discussed.

Again, the fastening device 2 comprises: an elongated member 16 at least partly provided with external engagement members 18, a first abutment 20 arranged concentrically with the elongated member 16, a displaceable member 22 connectable to a first band member 8 configured to extend at least partially around the first container and to a second band member 10 configured to extend at least partially around the second container, a guide arrangement 12 comprising a second abutment 24, a holed member 28 at least partly provided with internal engagement members 30, and a resilient compressible member 32.

The first and second band members 8, 10 are schematically indicated with broken lines in **Fig. 5b****.**

In these embodiments, the holed member 28 is a pipe portion provided with internal engagement members 30 in the form of internal threads.

The holed member 28 is rotationally locked in relation to the guide arrangement 12. Thus, the external engagement members 18 of the elongated member 16 may engage with the internal engagement members 30 of the holed member 30 without the holed member 28 rotating.

Accordingly, the holed member 28 is rotationally locked but movable along the axis 19.

As an example, the rotational lock may be achieved by corresponding formfitting contours of the holed member 28 and the guide arrangement 12. For example, in the embodiment shown in **Fig. 5a-5c****,** the rotational lock is achieved by the holed member 28, in the form of the pipe portion, having at least one flat external surface 34 and the guide arrangement 12 being provided with a hole 36 shaped such that the pipe portion snugly fits therein. In this manner, engagement the holed member 28 and the guide arrangement 12 in the hole 36 will prevent rotation of the holed member 28. Other shapes of the contours for rotationally locking the holed member 28 in relation to the guide arrangement 12 are possible, such as e.g. a triangular shape, a square shape, or a hexagonal shape.

Again, the elongated member 16 extends along an axis 19 and the displaceable member 22, the guide arrangement 12, the resilient compressible member 32, and the holed member 28 are aligned along the axis 19. Again, the elongated member 16 extends through the displaceable member 22, at least partially through the guide arrangement 12, and through the resilient compressible member 32 for engagement between the external engagement members 18 of the elongated member 16 and the internal engagement members 30 of the holed member 28 for compression of the resilient compressible member 32.

Like in the embodiments of **Figs. 3a and 3b****,** the resilient compressible member 32 is positioned between the second abutment 24 and the holed member 28.

According to these embodiments, the resilient compressible member 32 comprises a helical spring and/or a coned-disc spring (Belleville disc washer spring).

Alternatively, the resilient compressible member 32 may comprise an elastomer material, such as a rubber material.

The choice of the resilient compressible member 32 may depend on the particular use case of the fastening device 2. Mentioned purely as examples, an elastomer material may provide a short compression distance and a comparatively low compression force in comparison with the helical spring. A helical spring may provide a long compression distance and a low compression force in comparison with a coned-disc spring that may provide a short compression distance with a high compression force.

In these embodiments, the fastening device 2 comprises a sleeve 38 arranged concentrically with the axis 19. The sleeve 38 comprises the first abutment 20. The sleeve 38 is arranged between a head portion 21 of the elongated member 16 and the displaceable member 22.

Thus, the elongated member 16 extends through the sleeve 38 for the first abutment 20 to abut against the displaceable member 22 when the elongated member 16 engages with the holed member 28.

The guide arrangement 12 may be comprised of one or more parts, such as only one part as in the embodiments of **Figs. 3a** - **4b****.**

In the embodiments of **Figs. 5a** - **5b****,** the guide arrangement 12 comprises a first guide member 121. The first guide member 121 is provided with a through hole 26 concentrically with the axis 19. The resilient compressible member 32 and the holed member 28 are arranged at least partially within the first guide member 121. The second abutment 24 extends around the through hole 26.

The elongated member 16 extends through the through hole 26 of the first guide member 121 and through the resilient compressible member 32 to engage with the holed member 28.

The second abutment 24 is arranged for the resilient compressible member 32 to abut thereagainst.

The guide arrangement 12 further comprises a second guide member 122. The displaceable member 22 is arranged at least partially within the second guide member 122. In this manner, the displaceable member 22 may be securely arranged in the guide arrangement 12 and moreover, it may be guided in the guide arrangement 12.

According to these embodiments, the guide arrangement 12 comprises a distance member 123 arranged between the first guide member 121 and the second guide member 122. In this manner, the second guide member 122 may be positioned relative to the first guide member 121 such that the displaceable member 22 is arranged in suitable position for the first and second band members 8, 10 to extend at least partially around the first and second containers.

In the illustrated embodiments, the distance member 123 is hollow and the elongated member 16 extends through the distance member 123.

The distance member 123 may also protect the elongated member 16 as it extends through the distance member 123, such that the elongated member 123 is not impeded in its movement in relation to the guide arrangement 12 during use of the fastening device 2. Movement of the elongated member 16 is caused by the first and second band members 8, 10 moving when they follow expansion and contraction of the first and second containers.

According to alternative embodiments, the guide arrangement 12 may comprise only the first guide member 121 and the second guide member 122. A further alternative may be for the guide arrangement 12 to comprise only the first guide member 121 and the distance member 123.

The displaceable member 22 comprises a first pin 40 and a second pin 42 on opposite sides of the axis 19. The first band member 8 is connectable to the displaceable member 22 via the first pin 40 and the second band member 10 is connectable to the displaceable member 22 via the second pin 42, as indicated in **Fig. 5b****.**

Thus, the first and second band members 8 10 may be connected to the displaceable member 22. A pivotable connection between the displaceable member and the first and second band members 8, 10 may be achieved in this manner to ensure that the first and second band members 8, 10 align properly along a force component directed to/from the displaceable member 22.

The second guide member 122 comprises a first slot 44 and a second slot 46. More specifically, a body 47 of the second guide member 122 is provided with the first and second slots 44, 46.

The first pin 40 is slidably arranged in the first slot 44 and the second pin 42 is slidably arranged in the second slot 46.

Accordingly, as the displaceable member 22 is moved in relation to the guide arrangement 12 and the second guide member 122, the first and second pins 40, 42 are moved in a controlled manner along the first and second slots 44, 46.

More specifically, as the elongated member 16 engages with the holed member 28 and the resilient compressible member 32 is compressed, the displaceable member 22 is displaced towards the holed member 28 and the first guide member 121. During this displacement, the first and second pins 40, 42 follow along the first and second slots 44, 46.

In the illustrated embodiments, the first and second pins 40, 42 are slidably arranged in further slots 44', 46' provided in the second guide member 122.

Although not limiting to the general idea of utilising first and second pins 40, 42 for connecting the first and second band members 8, 10 to the displaceable member 22, in the illustrated embodiments, the displaceable member 22 comprises further first and second pins 48, 50 and linkage members 52 - 55 arranged between the first and second pins 40, 42 and the further first and second pins 48, 50, see **Fig. 5a**.

In this manner, the first and second pins 40, 42 may be movable not only in parallel with the axis 19 but also in a direction perpendicularly to the axis 19.

In **Fig. 5b****,** the fastening device 2 is shown in a pre-engaged state. The guide arrangement 12 is fastened to a structure (not shown), the first and second band members 8, 10 are positioned to extend at least partially around the first and second containers (not shown), and the elongated member 16 has been inserted through the displaceable member 22 and the through hole 26 of the guide arrangement 12 to extend into the resilient compressible member 32.

Thus, the external engagement members 18 of the elongated member 16 and the internal engagement members 30 of the holed member 28 are ready to be engaged with each other.

Note that the first and second pins 40, 42 are positioned at respective end portions of the first and second slots 44, 46.

In **Fig. 5c**, the fastening device 2 is shown in an engaged state. The external engagement members 18 of the elongated member 16 and the internal engagement members 30 of the holed member 28 are engaged with each other.

Thus, the first and second band members 8, 10 are tensioned around at least part of the first and second containers (not shown) by the displaceable member 22 having been displace in a direction towards the first guide member 121 and the holed member 28. Also, the resilient compressible member 32 has been compressed between the second abutment 24 and the holed member 28.

Note that the first and second pins 40, 42 are positioned at respective opposite end portions of the first and second slots 44, 46, compared to the positions of the pins 40, 42 in **Fig. 5b****.** That is, the displaceable member 22 has been displaced in relation to the guide arrangement 12 and its second guide member 122.

The guide arrangement 12 comprises at least two support surfaces 56, 58, see **Fig. 5a****,** each of which is configured for supporting one of the first and second containers 4', 4", see e.g. **Fig. 2c****.** Thus, in use of the fastening device 2, the first and second containers 4', 4" are securely positioned in relation to the fastening device 2.

The at least two support surfaces 56, 58 are configured for supporting the first and second containers 4', 4" e.g., by having a curved shape of the same or similar curvature as the first and second containers 4', 4" or by having any other shape suitable for supporting abutment against the first and second containers 4', 4".

**Fig. 6** illustrates a method 100 for assembly of a gas fuel storage assembly 5.

The gas fuel storage assembly 5 may be a gas fuel storage assembly 5 as discussed above with referent to **Figs. 2a** - **2c****.** Accordingly, in the following reference is also made to **Figs. 2a** - **2c****.**

The gas fuel storage assembly 5 comprises a fastening device 2 according to any one of aspects and/or embodiments discussed herein, such one of the fastening devices 2 discussed above with reference to **Figs. 2a** - **5c**. Accordingly, in the following reference is also made to **Figs. 2a -5c****.**

The gas fuel storage assembly 5 further comprises at least a first container 4' and a second container 4", a bracket 6, a first band member 8, and a second band member 10 as disclosed herein.

The method 100 comprises steps of:
- securing 102 the guide arrangement 12 of the fastening device 2 to the bracket 6,
- positioning 104 the first and second containers 4', 4" against the bracket 6,
- placing 106 the first and second band members 8, 10 to extend at least partially around the first and second containers 4', 4",
- securing 108 the first and second band members 8, 10 to the fastening device 2 and to the bracket 6, and
- engaging 110 the elongated member of the fastening device 2 with the holed member 28 of the fastening device 2 such that the resilient compressible member 32 of the fastening device 2 is compressed.

The step of securing 108 the first and second band members 8, 10 may comprise securing respective first ends 8', 10' of the first and second band members 8, 10 to the displaceable member 22 of the fastening device 2, such as to the first and second pins 40, 42. The opposite second ends 8", 10" of the first and second band members 8, 10 may be secured directly to the bracket 6 e.g., by being screwed thereto, or via dedicated attachment members connected to the bracket 6. Such dedicated attachment members being configured for holding ends of the first and second band members 8, 10.

The step of engaging 110 the elongated member of the fastening device 2 with the holed member 28 of the fastening device 2 such that the resilient compressible member 32 of the fastening device 2 is compressed provides the clamping force to secure the first and second containers 4', 4" to the bracket 6.

One or more of the steps of the method 100 may be performed in a different order than that listed above. For instance, the step of securing 108 the first and second band members 8, 10 may performed partially before the step of placing 106 the first and second band members 8, 10 and partially after the step of placing 106.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A fastening device (2) for fastening a first and a second container (4', 4") to a structure of a vehicle (1), the fastening device (2) comprising:
an elongated member (16) at least partly provided with external engagement members (18),
a first abutment (20) arranged concentrically with the elongated member (16),
a displaceable member (22) connectable to a first band member (8) configured to extend at least partially around the first container (4') and to a second band member (10) configured to extend at least partially around the second container (4"),
a guide arrangement (12), comprising a second abutment (24),
a holed member (28) at least partly provided with internal engagement members (30), and
a resilient compressible member (32) positioned between the first abutment (20) and the displaceable member (22) or between the second abutment (24) and the holed member (28), wherein
the elongated member (16) extends along an axis (19) and the displaceable member (22), the guide arrangement (12), the resilient compressible member (32), and the holed member (28) are aligned along the axis (19), wherein
the elongated member (16) extends through the displaceable member (22) and at least partially through the guide arrangement (12) for engagement between the external engagement members (18) of the elongated member (16) and the internal engagement members (30) of the holed member (28) for compression of the resilient compressible member (32).

2. The fastening device (2) according to claim 1, wherein the guide arrangement (12) comprises a first guide member (121), being provided with a through hole (26) concentrically with the axis (19), wherein the second abutment (24) extends around the through hole (26), and wherein the resilient compressible member (32) and the holed member (28) are arranged at least partially within the first guide member (121).

3. The fastening device (2) according to claim 1 or 2, wherein the guide arrangement (12) comprises a second guide member (122), and wherein the displaceable member (22) is arranged at least partially within the second guide member (122).

4. The fastening device (2) according to claim 3, wherein the guide arrangement (12) comprises a distance member (123) arranged between the first guide member (121) and the second guide member (122).

5. The fastening device (2) according to any one of the preceding claims, comprising a sleeve (38) arranged concentrically with the axis (19), and wherein the sleeve (38) comprises the first abutment (20).

6. The fastening device (2) according to any one of the preceding claims, wherein the displaceable member (22) comprises a first pin (40) and a second pin (42) on opposite sides of the axis (19), and wherein the first band member (8) is connectable to the displaceable member (22) via the first pin (40) and the second band member (10) is connectable to the displaceable member (22) via the second pin (42).

7. The fastening device (2) according to claim 3 or 4 and claim 6, wherein the second guide member (122) comprises a first slot 44 and a second slot (46), wherein the first pin (40) is slidably arranged in the first slot (40), and wherein the second pin (42) is slidably arranged in the second slot (46).

8. The fastening device (2) according to any one of the preceding claims, wherein the resilient compressible member (32) comprises a helical spring and/or a coned-disc spring.

9. The fastening device (2) according to any one of the preceding claims, wherein the guide arrangement (12) comprises at least two support surfaces (56, 58) each of which is configured for supporting one of the first and second containers (4', 4").

10. The fastening device (2) according to any one of the preceding claims, wherein the holed member (28) is rotationally locked in relation to the guide arrangement (12).

11. A gas fuel storage assembly (5) comprising at least a first container (4') and a second container (4") configured for storing gas, a bracket (6), a first band member (8), a second band member (10), and a fastening device (2) according to any one of the preceding claims, wherein the first and second band members (8, 10) and the fastening device (2) secure the first and second containers (4', 4") to the bracket (6).

12. The gas fuel storage assembly (5) according to claim 11, wherein the guide arrangement (12) of the fastening device (2) is secured to the bracket (6) between the first and second containers (4', 4").

13. The gas fuel storage assembly according to claim 11 or 12, wherein the first and second band members (8, 10) are connected to the bracket (6).

14. A vehicle (1) comprising a chassis (3) and a gas fuel storage assembly (5) according to any one of claims 11 - 13 connected to the chassis (3).

15. Method (100) for assembly of a gas fuel storage assembly (5) comprising at least a first container (4') and a second container (4") configured for storing gas, a bracket (6), a first band member (8), a second band member (10), and a fastening device (2) according to any one of claims 1 - 10, the method (100) comprising steps of:
securing (102) the guide arrangement (12) of the fastening device (2) to the bracket (6),
positioning (104) the first and second containers (4', 4") against the bracket (6),
placing (106) the first and second band members (8, 10) to extend at least partially around the first and second containers (4', 4"),
securing (108) the first and second band members (8, 10) to the fastening device (2) and to the bracket (6), and
engaging (110) the elongated member (16) of the fastening device (2) with the holed member (28) of the fastening device (2) such that the resilient compressible member (32) of the fastening device (2) is compressed.
